# EUROPEAN PATENT APPLICATION

(11) **EP 1 972 658 A1**
(43) Date of publication of application: **24.09.2008**
(21) Application number: 06833634.6
(22) Date of filing: 29.11.2006
(51) Int. Cl.: C08L 71/03, C08K 5/00, C08K 5/12, C08K 5/3492

(54) **RUBBER COMPOSITION, VULCANIZABLE RUBBER COMPOSITION AND RUBBER VULCANIZATE**

(30) Priority: 29.11.2005 JP 2005344355
(71) Applicant: Zeon Corporation, Tokyo 100-8246 (JP)
(72) Inventor: EJIRI, Kazuhiro, Tokyo 100-8246 (JP)
(74) Representative: Albrecht, Thomas
(86) International application number: PCT/JP2006/323830
(87) International publication number: WO 2007/063905

(57) **Abstract**

A rubber composition comprising an epihalohydrin rubber, and 2-10 weight parts, based on 100 weight parts of the epihalohydrin rubber, of a compound (A) having at least two carbon-carbon double bonds in the chainlike portion of the molecule and having a molecular weight of not larger than 500. The compound (A) is preferably a compound having a cyclic structure having the chainlike portion as a side chain in the molecule. The above-mentioned rubber composition preferably further comprises a diaryl secondary monoamine antioxidant (B) and a mercaptobenzimidazole antioxidant (C). A rubber vulcanizate made from the rubber composition has good heat-aging resistance and ozone resistance, and causes no substantial environmental pollution.

## Description

### Technical Field

This invention relates to an epihalohydrin rubber-based composition, a vulcanizable rubber composition, and a rubber vulcanizate. More particularly, it relates to a rubber composition giving a rubber vulcanizate having good heat-aging resistance and good ozone resistance, and causing almost no environmental pollution.

### Background Art

A vulcanizate of an epihalohydrin rubber has good heat resistance and good heat-aging resistance, and is widely used as various rubber goods which include, for example, oil-resistant hoses, tubes, diaphragms, gaskets, O-rings, an inner-liner of tires, heat-resistant belts, electric wire coverings and printing rolls.

In view of these uses, demand of the epihalohydrin rubber goods is enhanced to be used under severe conditions at a higher temperature and for a more prolonged period. The use under severe conditions tends to cause softening phenomenon and reduction in dynamic characteristics. To minimize these disadvantages, nickel dibutyldithiocarbamate (hereinafter abbreviated to "NBC" when appropriate) is often incorporated in the rubber for enhancing the heat-aging resistance and the ozone resistance. However, NBC contains nickel and often causes environmental pollution. Therefore an additive ingredient causing almost no environmental pollution, but exhibiting good heat-aging resistance and good ozone resistance, which are approximately the same level as those achieved by the incorporation of NBC, is eagerly desired as a substitute for NBC.

For examples, in NOC technical note No. 348, p850-851 as searched through the internet <URL:htp://www.jp-noc.co.jp-/rubber_web/images/noc348.pdf> on February 16, 2005, and NOC technical note No. 349, p61-62 as searched through the internet <URL:htp://www.jp-noc.eo.jp/rubber_web/images/noc349.pdf> on February 16, 2005, the effects of various antioxidants on epichlorohydrin rubber which is one of the epihalohydrin rubber are reported. The antioxidants include NBC, 2,2,4-trimethyl-1,2-dihydroquinoline polymer, 4,4'-bis-(α,α-dimethylbenzyl)-diphenylamine, N-phenyl-N'-(1,3-dimethylbutyl)-p-phenylenediamine, N-phenyl-N'-(3-methacryroyloxy-2-hydroxypropyl)-p-phenylenediamine and 2-mercaptobenzimidazole. It is reported therein that an enhanced effect of heat-aging resistance can be obtained by using specific antioxidants in combination, but, the effect of heat-aging resistance is on an approximately the same level as achieved by NBC.

In Japanese Unexamined Patent Publication No. 2001-019804, a rubber composition for use as material for a hose is proposed which comprises an epihalohydrin rubber comprising 40 to 92% by mol of epihalohydrin monomer units, 8 to 20% by mol of unsaturated epoxide monomer units and 0 to 40% by mol of other monomer units, a nitrile rubber, and a specific amount of a crosslinking agent for the epihalohydrin rubber and/or a crosslinking agent for the nitrile rubber. The hose having a layer comprised of a vulcanizate of the rubber composition is described as having good resistance to permeability of fuel oil and good ozone resistance. However, the rubber vulcanizate is not entirely satisfactory for use in a field where a high heat resistance is required.

### Disclosure of the Invention

Problems to Be Solved by the Invention In view of the foregoing background art, objects of the present invention are to provide a rubber composition giving a rubber vulcanizate having good heat-aging resistance and good ozone resistance, and causing environmental pollution to a minimized extent; a vulcanizable rubber composition giving such vulcanizate; and the rubber vulcanizate.

### Means for Solving the Problems

To achieve the above-mentioned objects, the present inventors made extensive researches, and found that the objects can be achieved by an epihalohydrin rubber-based composition having incorporated therein a specific amount of a specific carbon-carbon double bond-containing compound. Based on this finding, the present invention has been completed.

Thus, in a first aspect of the present invention, there is provided a rubber composition comprising an epihalohydrin rubber, and 2 to 10 parts by weight, based on 100 parts by weight of the epihalohydrin rubber, of a compound (A) having at least two carbon-carbon double bonds in the chainlike portion of the molecule and having a molecular weight of not larger than 500.

The above-mentioned compound (A) is preferably a compound having a cyclic structure having the chainlike portion as a side chain in the molecule. The above-mentioned rubber composition preferably further comprises a diaryl secondary monoamine antioxidant (B) and a mercaptobenzimidazole antioxidant (C).

In a second aspect of the present invention, there is provided a vulcanizable rubber composition, which comprises the above-mentioned rubber composition, and a vulcanizer.

In a third aspect of the present invention, there is provided a rubber vulcanizate made by vulcanizing the above-mentioned vulcanizable rubber composition.

### Effect of the Invention

According to the present invention, there are provided a rubber composition giving a rubber vulcanizate having good heat-aging resistance and good ozone resistance, and causing no substantial environmental pollution; a vulcanizable rubber composition giving such rubber vulcanizate; and the rubber vulcanizate.

### Best Mode for Carrying Out the Invention

The rubber composition, the vulcanizable rubber composition and the rubber vulcanizate according to the present invention will be specifically described.

By the term "vulcanization" as used in this specification, we mean crosslinking as ordinarily used in the rubber industry and said term is not limited to the crosslinking caused by a sulfur vulcanizer. By the term "heat-aging resistance" as used herein, we mean the resistance of a rubber vulcanizate to the change of physical properties as observed when the rubber vulcanizate is left to stand at a certain high temperature in an air atmosphere for a predetermined period of time. By the term "resistance to ozone" as used herein, we mean the resistance of a rubber vulcanizate to the deterioration caused by ozone contained in the air. These resistances of a rubber vulcanizate can be evaluated by the methods described in the working examples recited below.

The rubber composition according to the present invention comprises an epihalohydrin rubber, and 2 to 10 parts by weight, based on 100 parts by weight of the epihalohydrin rubber, of a compound (A) having at least two carbon-carbon double bonds in the chainlike portion of the molecule and having a molecular weight of not larger than 500.

The epihalohydrin rubber as used in the present invention is a polymer prepared by ring-opening polymerization of an epihalohydrin monomer (hereinafter referred to as "monomer (a1)" when appropriate) or a copolymer prepared by ring-opening copolymerization of a monomer (a1) with a monomer copolymerizable therewith.

The monomer (a1) includes, for example, epichlorohydrin, epibromohydrin and 2-methylepichlorohydrin. Of these, epichlorohydrin is preferably used. Epihalohydrins may be used either alone or as a combination of at least two thereof.

The content of units of the monomer (a1) in the total monomer units in the epihalohydrin rubber is not particularly limited, but preferably in the range of 20 to 100% by mol, more preferably 25 to 90% by mol and especially preferably 30 to 85% by mol, based on the total monomer units in the rubber. If the content of the monomer (a1) units is too small, a rubber vulcanizate tends to exhibit undesirably large water absorption.

The monomer copolymerizable with the epihalohydrin monomer includes an oxirane monomer, preferably an alkylene oxide (hereinafter referred to as "monomer (a2) when appropriate"). As specific examples of the monomer (a2), there can be mentioned straight chain or branched chain alkylene oxides such as ethylene oxide, propylene oxide, 1,2-epoxybutane, 2,3-epoxybutane, 1,2-epoxy-4-chloropentane, 1,2-epoxyhexane, 1,2-epoxyoctane, 1,2-epoxydecane, 1,2-epoxytetradecane, 1,2-epoxyhexadecane, 1,2-epoxyoctadecane, 1,2-epoxyeicosane, 1,2-epoxyisobutane and 2,3-epoxyisobutane; and cyclic alkylene oxides such as 1,2-epoxycyclopentane, 1,2-epoxycyclohexane and 1,2-epoxycyclododecane. Of these straight chain alkylene oxides are preferable. Ethylene oxide and/or propylene oxide are especially preferable. A part of the hydrogen atoms in the alkylene oxides may be substituted by halogen atoms. The oxirane monomers may be used either alone or as a combination of at least two thereof.

The content of units of the monomer (a2) in the total monomer units in the epihalohydrin rubber is not particularly limited, but preferably in the range of 0 to 80% by mol, more preferably 10 to 75% by mol and especially preferably 15 to 70% by mol. If the content of the monomer (a2) units is too large, a rubber vulcanizate tends to be foamed at molding and exhibit undesirably large water absorption.

The epihalohydrin rubber may comprise units of a monomer (a3) having a crosslinkable functional group as at least part of units of the oxirane monomer copolymerizable with the monomer (a1). As specific examples of the monomer (a3), there can be mentioned compounds having a glycidyl ether group such as vinyl glycidyl ether, allyl glycidyl ether and o-allylphenyl glycidyl ether; compounds having a glycidyl ester group such as glycidyl acrylate, glycidyl methacrylate, glycidyl crotonate, glycidyl 4-heptenoate, glycidyl sorbate, glycidyl linolate, a glycidyl ester of 3-cyclohexenecarboxylic acid, a glycidyl ester of 4-methyl-3-cyclohexenecarboxylic acid and glycidyl 4-methyl-3-pentenoate; and epoxy group-containing unsaturated hydrocarbons such as 3,4-epoxy-1-butene, 1,2-epoxy-3-pentene and 1,2-epoxy-5,9-cyclododecadiene. Of these allyl glycidyl ether is preferable because a rubber vulcanizate has excellent ozone resistance.

The content of units of the monomer (a3) in the epihalohydrin rubber is not particularly limited, but preferably not larger than 15% by mol and more preferably not larger than 10% by mol. If the content of the monomer (a3) units is too large, a rubber vulcanizate tends to have a too low elongation at break.

The epihalohydrin rubber has a Mooney viscosity ML₁₊₄ (100°C) usually in the range of 30 to 160, and preferably 40 to 120. When the Mooney viscosity is too large or too small, processability and kneadability of the epihalohydrin rubber with additive ingredients undesirably becomes poor.

The process for producing the epihalohydrin rubber used in the present invention is not particularly limited. The epihalohydrin rubber may be produced by copolymerization of the monomers according to the conventional polymerization procedure. The Mooney viscosity of rubber can be controlled to a desired value by appropriately choosing the formulation of monomers.

The compound (A) contained in the rubber composition according to the present invention, i.e., a compound having at least two carbon-carbon double bonds in the chainlike portion of the molecule includes, for example, compounds having chainlike conjugated double bonds such as 1,3-butadiene, 1,3-pentadiene and isoprene; compounds having chainlike non-conjugated double bonds such as 1,4-hexadiene, 4-methyl-1,4-hexadiene and 5-methyl-1,4-hexadiene; compounds having a cyclic structure having carbon-carbon double bonds in a side chain such as diallyl isophthalate, 5, 6-divinyl-2-norbornene and triallyl cyanurate. Of these, the compounds having a cyclic structure having carbon-carbon double bonds in a side chain, i.e., compounds having a cyclic structure having the above-mentioned chainlike portion as a side chain in the molecule, are preferable. The compounds (A) may be used either alone or as a combination of at least two thereof.

The compound (A) has a molecular weight of not larger than 500, preferably in the range of 150 to 400 and more preferably 200 to 350. If the molecular weight of compound (A) is too small, a rubber vulcanizate is liable to have poor heat-aging resistance. In contrast, if the molecular weight of compound (A) is too large, a rubber vulcanizate is liable to have poor ozone resistance.

The content of the epihalohydrin rubber in the rubber composition of the present invention is preferably at least 60% by weight and more preferably at least 65% by weight, in view of good processing properties of the rubber composition and good physical properties required for a rubber vulcanizate.

The content of the compound (A) in the rubber composition of the present invention is in the range of 2 to 10 parts by weight, preferably 3 to 8 parts by weight and more preferably 5 to 7 parts by weight, based on 100 parts by weight of the epihalohydrin rubber. If the content of compound (A) in the rubber composition is too small, a rubber vulcanizate often has poor ozone resistance. In contrast, if the content of compound (A) is too large, the rubber composition tends to have poor processability and a rubber vulcanizate often has poor heat-aging resistance and poor compression set.

The rubber composition of the present invention preferably comprises an antioxidant. The antioxidant used includes those which are conventionally used in the rubber industry. A preferable antioxidant is a combination of a diaryl secondary monoamine antioxidant (B) with a mercaptobenzimidazole antioxidant (C).

The diaryl secondary monoamine antioxidant (B) is a secondary monoamine compound having two aromatic rings which may have a substituent or substituents, and includes, for example, 4,4'-di-(α,α-dimethylbenzyl)dipehenylamine (which is also called as p,p'-dicumyldiphenylamine), p,p'-dioctyidiphenylamine and phenyl-α-naphthylamine. Of these, 4,4'-di- (α,α-dimethylbenzyl)dipehenylamine is preferable.

The mercaptobenzimidazole antioxidant (C) includes, fpr example, 2-mercaptobenzimidazole, 2-mercaptobenzimidazole zinc salt, 2-mercaptomethylbenzimidazole and 2-mercaptomethyl benzimidazole zinc salt. Of these, 2-mercaptobenzimidazole is preferable.

The contents of component (B) and component (C) in the rubber composition of the present invention are in the ranges of 0.2 to 2 parts by weight and 0.1 to 1 part by weight, respectively, based on 100 parts by weight of the epihalohydrin rubber in view of the heat-aging resistance of a rubber vulcanizate. That is, when the contents of component (B) and/or component (C) are in these ranges, a rubber vulcanizate has more enhanced heat-aging resistance.

The ratio [(B)/(C)] of the content of component (B) to the content of component (C) is not particularly limited, but, preferably in the range of 0.75 to 3 and more preferably 1.5 to 2.5 in view of the more enhanced heat-aging resistance of a rubber vulcanizate.

The rubber composition of the present invention may comprise rubbers other than the epihalohydrin rubber, provided that the object of the present invention can be achieved. Such rubbers include, for example, unsaturated rubbers such as isoprene rubber, butadiene rubber, styrene-butadiene rubber and chloroprene rubber; and highly saturated rubbers such as butyl rubber, ethylene-propylene rubber, ethylene-acrylic rubber, acrylic rubber, chlorosulfonated polyethylene, chlorinated polyethylene, hydrogenated nitrile rubber, silicone rubber and fluororubber. The content of these rubbers can be appropriately chosen.

The rubber composition of the present invention may comprise additive ingredients other than the above-mentioned ingredients. Such additive ingredients can be those which are conventionally used in the rubber industry and which include, for example, reinforcing fillers such as carbon black and silica, non-reinforcing fillers such as calcium carbonate and clay, processing aids such as sorbitan monostearate, plasticizers such as di(butoxy-ethoxyethyl) adipate, acid acceptors such as magnesium oxide, antioxidants other than the above-mentioned component (B) and component (B), light stabilizers, slipping agents, sticking agents, lubricants, fire retardants, mildew proofing agents, colorants and antistatic agents. The amounts of these additive ingredients to be incorporated in the rubber composition of the present invention can be appropriately chosen so that the processing conditions of the rubber composition and the properties required for a rubber vulcanizate are satisfied.

The method for preparing the rubber composition of the present invention is not particularly limited. For example, a method of mixing the epihalohydrin rubber, the above-mentioned components (A), (B) and (C), and other optional additive ingredients using a mixer such as an open roll, a Bunbury mixer, or an internal mixer. The mixing is carried out, for example, preferably at a temperature of about 40 to 70°C.

The present invention is further concerned with a vulcanizable rubber composition, which comprises the above-mentioned rubber composition of the present invention, and a vulcanizer.

When the vulcanizable rubber composition of the present invention is vulcanized, it gives a rubber vulcanizate exhibiting the above-mentioned beneficial effects attained by the present invention.

The vulcanizer used is not particularly limited, and include those which are conventionally used for epihalohydrin rubbers. As the vulcanizer for epihalohydrin rubber, thiourea vulcanizers, triazine vulcanizers, quinoxaline vulcanizers and amine vulcanizers can be mentioned.

The thiourea vulcanizers include, for example, ethylene thiourea, diethylthiourea, dibutylthiourea, dilaurylthiourea, trimethylthiourea and diphenylthiourea. Of these, ethylene thiourea is preferable.

The triazine vulcanizers are triazine compounds having at least two mercapto groups, which may have substituents having 1 to 10 carbon atoms such as alkyl, alkylamino and dialkylamino groups. Such triazine compounds include, for example, 2,4,6-trimercapto-s-triazine, 2-methyl-4,6-dimercapto-s-triazine, 2-ethylamino-4,6-dimercapto-s-triazine and 2-diethylamino-4,6-dimercapto-s-triazine. Of these, 2,4,6-trimercapto-s-triazine is preferable.

The quinoxaline vulcanizers include, for example, unsubstituted or alkyl group-substituted 2,3-dimercaptoquinoxaline and quinoxaline-2,3-dithiocarbonate. The alkyl substituents preferably have 1 to 4 carbon atoms. As specific examples of the quinoxaline vulcanizers, there can be mentioned 2,3-dimercaptoquinoxaline, quinoxaline-2,3-dithiocarbonate, 6-methylquinoxaline-2,3-dithiocarbonate, 6-isopropylquinoxaline-2,3-dithiocarbonate and 5,8-dimethylquinoxaline-2,3-dithiocarbonate.

The amine vulcanizers include, for example, polyamine compounds, preferably polyamine compounds having 2 to 20 carbon atoms. As specific examples thereof, there can be mentioned hexamethylenediamine, triethylenetetramine, tetraethylenepentamine, N,N'-dicinnamylidene-1,6-hexanediamine, hexamethylenediamine carbamate and 4,4'-methylenebis(cyclohexylamine) carbamate.

Among the above-mentioned vulcanizers, triazine vulcanizers are preferable in view of the enhanced crosslinking property and the reduced environmental pollution.

The content of the vulcanizer in the rubber composition of the present invention is preferably in the range of 0.1 to 5 parts by weight and more preferably 0.2 to 3 parts by weight, based on 100 parts by weight of the epihalohydrin rubber. When the content of vulcanizer is too small, the rate of vulcanization tends to be too low and the vulcanization density is liable to be too small. In contrast, when the content of vulcanizer is too large, the vulcanization density is liable to be too large and a rubber vulcanizate becomes too hard.

The vulcanizable rubber composition of the present invention may comprise additive ingredients, other than the above-mentioned optional ingredients. Such additive ingredients include, for example, a vulcanization retardant and a vulcanization accelerator, which are appropriately used for vulcanization of epihalohydrin rubbers. The amounts of these additive ingredients in the vulcanizable rubber composition of the present invention can be appropriately chosen depending upon the use of a rubber vulcanizate and the kind of vulcanizer used.

The method of preparing the vulcanizable rubber composition is not particularly limited, but a vulcanizer and a vulcanization accelerator capable of being activated upon heating should be mixed with the epihalohydrin rubber under conditions in which vulcanization does not occur. For example, the vulcanizer and the vulcanization accelerator are added to the rubber composition of the present invention, and the mixture is kneaded, at a temperature lower than the vulcanization initiation temperature. A vulcanization accelerator incapable of being activated upon heating can be incorporated and kneaded under heating together with other ingredients in the rubber composition of the present invention in the preparation process thereof.

The rubber vulcanizate of the present invention is made by vulcanizing the vulcanizable rubber composition of the present invention. The method of vulcanizing the vulcanizable rubber composition is not particularly limited. The vulcanization can be carried out under heating after the vulcanizable rubber composition is shaped, or simultaneously with shaping. A secondary vulcanization can be conducted if desired.

The vulcanization temperature is not particularly limited but is preferably such that the lower limit is 130°C, more preferably 140°C, and the upper limit is 250°C. When the vulcanization temperature is in this range, the crosslinking time and the crosslink density can be suitably set and the shaping of rubber vulcanizate can be appropriately carried out. The heating time is preferably in the range of 1 minute to 5 hours.

The method of heating for vulcanization is appropriately chosen from the conventional method for vulcanization of rubber which includes, for example, press heating, steam heating, oven heating and hot air heating.

The rubber vulcanizate of the present invention has good heat-aging resistance and ozone resistance, and therefore, is widely used in rubber goods for which such properties are desired, such as hoses including a fuel hose, a lubricating oil hose and an air hose.

### Examples

The invention will now be more specifically described by the following examples and comparative examples that by no means limit the scope of the invention. Parts in these examples are by weight unless otherwise specified. Properties of rubber vulcanizates were evaluated by the following methods.

### (1) Dry Properties

As dry properties, tensile strength and elongation at break were measured on a rubber vulcanizate sheet specimen at 25°C by the tensile test method according to JIS K6251.

### (2) Heat-Aging Resistance

The rubber vulcanizate specimen used for the test of dry properties was left to stand at 135°C for 24 hours, and then, tensile strength and elongation at break were again measured by the same method as adopted for the measurement of dry properties (1). The heat-aging resistance was evaluated by the change ratio (%) of the tensile strength and the elongation at break as calculated from the values as measured before and after the heat-aging test. The smaller the value of the change ratio, the better the heat-aging resisatnce of rubber vulcanizate.

### (3) Ozone Resisatance

A rubber vulcanizate sheet specimen was maintained at an elongation of 60% and a temperature of 40°C in an air atmosphere having an ozone concentration of 50 pphm. When 72 hours, 168 hours and 240 hours elapsed from the initiation of maintenance, the state of the specimen was observed. The ozone resistance was expressed by the following three ratings.
NC: Occurrence of cracks was not observed.
A: Number of cracks is small.
B: Number of cracks is large.

When the size of cracks is too small to be detected by the naked eyes, but, cracks could be detected by an amplifier with a magnification of 10 times, the figure "1" was attached to "A" or "B". The smaller the number of cracks, the better the ozone resistance.

### (4) Compression Set

A specimen was compressed into a thickness of 75% of the original thickness, and the compressed specimen was maintained at a temperature of 135°C for 72 hours. Then the measurement of compression set was made. The smaller the compression set, the better the compression set.

### Examples 1-3, Comparative Examples 1-4

According the formulation shown in Table 1 and described below, rubber compositions were prepared.

100 parts of epichlorohydrin rubber 1 or epichlorohydrin rubber 2 was mixed with the following ingredients:
Carbon black ("Asahi #60" available from Asahi Carbon Co., Ltd.) 40 parts,
Ester wax ("Sprender R300" available from Kao Corporation) 3 parts,
Magnesium oxide ("Kyouwa Mag" available from Kyouwa Chemical Industry Co., Ltd.) 3 parts, and
Calcium carbonate ("HAKUENKA CC" available from Shiraishi Calcium Kaisha, Ltd.) 5 parts.

In Examples 1-3, diallyl isophthalate (having two carbon-carbon double bonds in the chainlike portion in the molecule; molecular weight 246) or triallyl cyanurate (having three carbon-carbon double bonds in the chainlike portion in the molecule; molecular weight 245) as compound (A) in an amount shown in Table 1 was added to epichlorohydrin rubber 1 or epichlorohydrin rubber 2.

In Examples 2 and 3, the following antioxidants in amounts shown in Table 1 were further added:
4,4'-di-(α,α-dimethylbenzyl)diphenylamine [component (B)] and 2-mercaptobenzimidazole [component (C)]. Each mixture was kneaded together by using a Bunbury mixer to give a rubber composition.

For comparison, in Comparative Example 1, the compound (A) was not added, but, the component (B) and the component (C) in the same amounts as in Example 2 were added to epichlorohydrin rubber 2 to prepare a rubber composition. In Comparative Examples 2, 3 and 4,
N-phenyl-N'-(3-methacryloyloxy-2-hydroxypropyl)-p-phenylenediamine (which is a compound having a single carbon-carbon double bond in the chainlike portion of the molecule and a molecular weight not larger than 500) 3 parts,
diallyl isophthalate 13 parts, or
nickel dibutyldithiocarbamate 1 part was added, respectively, to 100 parts of epichlorohydrin rubber 2. Each mixture was kneaded together by using a Bunbury mixer to give a rubber composition.

To each of the thus-prepared rubber compositions, 0.9 part of 2,4,6-trimercapto-s-triazine ("JISNET F" vulcanizer available from Sankyo Kasei Co., Ltd. and 1 part of N-(dicyclohexylthio)-phthalimide ("Santguard PVI" vulcanization retardant available from Mitsubishi Chemical MKV Corporation) were added and mixed together by using an open roll to prepare a vulcanizable rubber composition.

The vulcanizable rubber composition was subjected to vulcanization at 160°C for 30 minutes by using a heat platen press to give a rubber vulcanizate sheet having a size of 15 mm × 15 mm and a thickness of 2 mm. Dry properties, heat-aging resistance, ozone resistance and compression set of the rubber vulcanizate sheet were evaluated. The results are shown in Table 1.

**Table 1**

| | Examples | | | Comparative Examples | | | |
|---|---|---|---|---|---|---|---|
| | 1 | 2 | 3 | 1 | 2 | 3 | 4 |
| Formulation (parts) | | | | | | | |
| Epichlorohydrin rubber | | | | | | | |
| Epichlorohydrin rubber 1 *1 | - | - | 100 | - | - | - | - |
| Epichlorohydrin rubber 2 *2 | 100 | 100 | - | 100 | 100 | 100 | 100 |
| Compound (A) with double bonds | | | | | | | |
| Diallyl isophthalate *3 | 5 | 3 | - | - | - | 13 | - |
| Triallyl isocyanurate *4 | - | - | 5 | - | - | - | - |

| Antioxidants | | | | | | | |
|---|---|---|---|---|---|---|---|
| (B) 4,4'-Di-(α,α-dimethyl benzyl)diphenylamine *5 | - | 0.5 | 1 | 0.5 | - | - | - |
| (C) 2-Mercaptobenzimidazole *6 | - | 0.3 | 0.5 | 0.3 | - | - | - |
| N-phenyl-N'-(3-methacryloyloxy-2-hydroxypropyl)-p-phenylenediamine *7 | - | - | - | - | 3 | - | - |
| Nickel dibutyldithiocarbamate *8 | - | - | - | - | - | - | 1 |
| Weight ratio of (B)/(C) | - | 1.67 | 2 | 1.67 | - | - | - |

| Evaluation results | | | | | | | |
|---|---|---|---|---|---|---|---|
| Dry properties | | | | | | | |
| Tensile strength (MPa) | 11.2 | 10.8 | 11.3 | 12.8 | 12.6 | 11.6 | 13.0 |
| Elongation (%) | 500 | 510 | 620 | 600 | 510 | 740 | 420 |

| Heat-aging resistance | | | | | | | |
|---|---|---|---|---|---|---|---|
| Change ratio of tensile strength (%) | -14 | +4 | +6 | -13 | -36 | -31 | +4 |
| Change ratio of elongation (%) | -58 | -65 | -59 | -65 | -48 | -66 | -55 |

| Ozone resistance | | | | | | | |
|---|---|---|---|---|---|---|---|
| 72 hours | NC | NC | NC | NC | NC | NC | NC |
| 168 hours | NC | NC | NC | A1 | NC | NC | NC |
| 240 hours | NC | NC | NC | B1 | NC | NC | NC |
| Compression set (%) | 40 | 46 | 48 | 62 | 63 | 58 | 38 |

| | | | | | | | |
|---|---|---|---|---|---|---|---|
| Note, *1 Epichlorohydrin rubber 1, "Hydrin C2000L" available from Zeon Corporation, epichlorohydrin-ethylene oxide copolymer, Mooney viscosity 70, *2 Epichlorohydrin rubber 2, "Hydrin T3102" available from Zeon Corporation, epichlorohydrin-ethylene oxide-allyl glycidyl ether copolymer, Mooney viscosity 90, *3 Compound (A) having two carbon-carbon double bonds in the chainlike portion of the molecule, *4 Compound (A) having three carbon-carbon double bonds in the chainlike portion of the molecule, *5 4,4'-Di-(α,α-dimethylbenzyl)diphenylamine, "NAUGUARD 445" available from Crompton Corporation *6 2-mercaptobenzoimidazole, "NOCRAC MB" available from Ouchi Shinko Chemical Industrial Co., Ltd. *7 N-Phenyl-N'-(3-methacryloyloxy-2-hydroxypropyl)-p-phenylenediamine, "NOCRAC G-1" available from Ouchi Shinko Chemical Industrial Co., Ltd. *8 Nickel dimethyldithiocarbamate, "NOCRAC NBC" available from Ouchi Shinko Chemical Industrial Co., Ltd. | | | | | | | |

As seen from the factual data given in Table 1, rubber vulcanizates of the present invention in Examples 1 to 3, which were prepared by vulcanization of an epihalohydrin rubber-based composition comprising 2 to 10 parts by weight, based on 100 parts by weight of the epihalohydrin rubber, of a compound (A) having at least two carbon-carbon double bonds in the chainlike portion of the molecule and having a molecular weight of not larger than 500, exhibited enhanced heat-aging resistance and enhanced ozone resistance, and reduced compression set. When a combination of antioxidant component (B) with antioxidant component (C) were incorporated in the epihalohydrin rubber-based composition of the present invention, the rubber vulcanzate exhibited more enhanced heat-aging resistance (Examples 2 and 3). The heat-aging resistance of this rubber vulcanizate was approximately the same level as that of the rubber composition having NBC antioxidant incorporated therein (Comparative Example 4).

In contrast, when the compound (A) was not incorporated, the rubber vulcanizate exhibited poor ozone resitance and large compression set, even though a combination of antioxidant component (B) with antioxidant component (C) was incorporated (Comparative Example 1). When another antioxidant having a different structure was incorporated and the compound (A) was not incorporated, the rubber vulcanizate exhibited poor heat-aging resistance and large compression set (Comparative Example 2). The antioxidant used in Comparative Example 2 was a compound having a single carbon-carbon double bond in the chainlike portion of the molecule, which was different from the compound (A) used in the present invention. When too large amount of the compound (A) was incorporated, the rubber vulcanizate exhibited poor heat-aging resistance and large compression set (Comparative Example 3). Note, the rubber vulcanizate in Comparative Example 4 is not satisfactory in environmental pollution, although this property is not shown in Table 1.

The rubber composition of the present invention does not cause or causes only to a minimized extent environmental pollution, and gives a rubber vulcanizate having good heat-aging resistance and ozone resistance and reduced compression set. These beneficial properties are approximately the same level as those of the rubber composition containing NBC antioxidant (Comparative Example 4) which causes environmental pollution.

### Industrial Applicability

The rubber composition of the present invention gives a rubber vulcanizate having good heat-aging resistance and ozone resistance, and reduced compression set, and substantially not causing environmental pollution.

The rubber vulcanizate is widely used as various rubber goods which include, for example, oil-resistant hoses, tubes, diaphragms, gaskets, O-rings, an inner-liner of tires, heat-resistant belts, electric wire coverings and printing rolls.

## Claims

1. A rubber composition comprising an epihalohydrin rubber, and 2 to 10 parts by weight, based on 100 parts by weight of the epihalohydrin rubber, of a compound (A) having at least two carbon-carbon double bonds in the chainlike portion of the molecule and having a molecular weight of not larger than 500.

2. The rubber composition according to claim 1, wherein the epihalohydrin rubber is a polymer prepared by ring-opening polymerization of an epihalohydrin monomer or a copolymer prepared by ring-opening copolymerization of an epihalohydrin monomer with a monomer copolymerizable therewith.

3. The rubber composition according to claim 2, wherein the monomer copolymerizable with the epihalohydrin monomer is an oxirane monomer.

4. The rubber composition according to claim 3, wherein the epiholohydrin monomer is epichlorohydrin, and the oxirane monomer is at least one monomer selected from ethylene oxide and propylene oxide.

5. The rubber composition according to claim 3, wherein the epiholohydrin rubber comprises not larger than 15% by weight of monomer units having a crosslinkable functional group as at least part of units of the oxirane monomer.

6. The rubber composition according to claim 1, wherein the epihalohydrin rubber has a Mooney viscosity ML₁₊₄ (100°C) in the range of 30 to 160.

7. The rubber composition according to claim 1, wherein the content of the epihalohydrin rubber is at least 60% by weight.

8. The rubber composition according to claim 1, wherein the compound (A) is a compound having a cyclic structure having the chainlike portion as a side chain in the molecule.

9. The rubber composition according to claim 8, wherein the compound having a cyclic structure having the chainlike portion as a side chain in the molecule is selected from diallyl isophthalate, 5, 6-divinyl-2-norbornene and triallyl cyanurate.

10. The rubber composition according to claim 1, which further comprises a diaryl secondary monoamine antioxidant (B) and a mercaptobenzimidazole antioxidant (C).

11. The rubber composition according to claim 10, wherein the contents of component (B) and component (C) are in the ranges of 0.2 to 2 parts by weight and 0.1 to 1 part by weight, respectively, based on 100 parts by weight of the epihalohydrin rubber; and the ratio [(B)/(C)] by weight of the content of component (B) to the content of component (C) is in the range of 0.75 to 3.

12. A vulcanizable rubber composition, which comprises the rubber composition as claimed in claim 1, and a vulcanizer.

13. The vulcanizable rubber composition according to claim 12, wherein the vulcanizer is selected from thiourea vulcanizers, triazine vulcanizers, quinoxaline vulcanizers and amine vulcanizers.

14. The vulcanizable rubber composition according to claim 12, wherein the content of the vulcanizer is in the range of 0.1 to 5 parts by weight based on 100 parts by weight of the epihalohydrin rubber.

15. A rubber vulcanizate made by vulcanizing the vulcanizable rubber composition as claimed in claim 12.
